# FASCICULE DE BREVET EUROPEEN

(11) **EP 1 501 248 B1**
(45) Date de publication et mention de la délivrance du brevet: **17.10.2007**
(21) Numéro de dépôt: 04291609.8
(22) Date de dépôt: 25.06.2004
(51) Int. Cl.: H04L 12/58, G06Q 10/00, H04L 29/06

(54) **Système et procédé de messagerie électronique**
System und Verfahren zur elektronischen Benachrichtigung
System and method for electronic messaging

(30) Priorité: 22.07.2003 FR 0308912
(43) Date de publication de la demande: 26.01.2005
(73) Titulaire: FRANCE TELECOM, 75015 Paris (FR)
(72) Inventeur: Mainard, Laurent, 35000 Rennes (FR); Courval, Lionel, 14210 Amaye sur Orne (FR); Piquereau, Philippe, 14610 Basly (FR)
(74) Mandataire: Joly, Jean-Jacques

(56) Documents cités:
- WO-A-01/43357
- US-A- 5 933 478
- US-A1- 2003 108 002
- US-A1- 2003 115 270

## Description

### Domaine de l'invention

La présente invention concerne le domaine des messageries électroniques qui permettent l'échange de messages sur des réseaux de communications tels que le réseau Internet. Elle concerne plus particulièrement les messageries dans lesquelles les messages électroniques sont transmis de manière instantanée.

### Art antérieur

Le courrier électronique "e-mail" mis en oeuvre grâce aux services de messagerie est aujourd'hui largement répandu sur les réseaux ouverts tel que le réseau "Internet" ainsi que sur les réseaux locaux de type "Intranet" rencontrés dans les entreprises.

On distingue deux types de messagerie, à savoir la messagerie standard et la messagerie instantanée. La messagerie standard, qui est la plus répandue actuellement, fonctionne de la façon suivante. Lorsqu'un message électronique est envoyé par un utilisateur à destination d'un autre utilisateur du même réseau informatique, il est d'abord archivé sur le serveur de messagerie dont le destinataire est client. Le destinataire ne recevra le message sur son terminal qu'après avoir interrogé sa boîte aux lettres sur le serveur et téléchargé le message stocké sur le serveur.

Les normes qui décrivent ces systèmes de messagerie peuvent être classées suivant trois types. Le premier type correspond aux normes qui décrivent le protocole de transfert des messages tel que le protocole simple de gestion de réseau "SMTP RFC 2821 ou RFC 2822". Ce protocole gère l'envoi des courriers électroniques entre différents serveurs ou à partir des ordinateurs clients. Le deuxième type est constitué par les normes décrivant les protocoles de retrait des messages tels que le protocole de bureau de poste "POP3 RFC 1939" ou "IMAP4 RFC 2060", qui assurent la gestion des messages qui sont adressés à leur destinataire. Enfin, le troisième type de norme correspond à celui des normes qui décrivent les modalités d'encodage du contenu des messages telles que le format "MIME RFC 2045-2049" conçu pour transférer par courrier électronique des données codées autres que du texte.

L'incapacité des messageries standards à garantir la transmission des messages en un temps très court a donné naissance à une nouvelle famille de services de messagerie appelés "messagerie instantanée".

En général, un service de messagerie instantanée permet à ses abonnés d'échanger de courts messages de textes en temps réel. Ce type de service offre aux clients un moyen facile de communiquer et constitue un outil fiable pour la transmission de courts messages de textes.

Cependant, les services de messagerie instantanée proposés aujourd'hui présentent certains inconvénients qui limitent leur développement et leur utilisation par un grand nombre d'utilisateurs notamment ceux qui utilisent déjà une messagerie standard.

En effet, à l'heure actuelle, les programmes populaires de messagerie instantanée offerts sur le marché utilisent des protocoles propriétaires qui ne sont pas compatibles. Par conséquent, seuls les utilisateurs d'un même logiciel de messagerie et clients du même service de messagerie peuvent échanger des messages instantanés. De plus, en raison de leur incompatibilité avec les messageries standards, les utilisateurs doivent avoir un logiciel spécifique pour la messagerie instantanée, ce qui implique un surcoût pour l'utilisateur. L'utilisateur doit également acquérir des connaissances supplémentaires pour l'utilisation de ce logiciel par rapport à celles déjà assimilées pour son logiciel de messagerie standard. De même, du côté réseau, il est nécessaire d'avoir des serveurs entièrement dédiés pour chaque produit de messagerie instantanée. Par conséquent, que ce soit du côté client ou du côté serveur, la mise en oeuvre d'une messagerie instantanée représente un investissement important qui freine son développement. Les particuliers et les entreprises pourraient tirer un bien meilleur parti de la messagerie instantanée si ce type d'application faisait appel à des protocoles compatibles, tels que ceux proposés avec les messageries standards.

Le document US 5 933 478 décrit un système dans lequel des données reçues sur un ordinateur hôte peuvent être transférées sur un terminal mobile.

L'unification de la messagerie électronique et de la messagerie instantanée permettrait aux utilisateurs et administrateurs de ne gérer qu'un seul système de messagerie et une seule adresse. Cela réduirait ainsi les ressources matérielles, logicielles et humaines mises en oeuvre pour l'utilisation et l'exploitation de l'ensemble de ces services.

### Objet et description succincte de l'invention

La présente invention vise à remédier aux inconvénients précités et à proposer une solution technique qui permet à partir d'un système de messagerie standard de réduire le délai de transmission des messages entre les utilisateurs pour donner l'impression d'une transmission quasiment synchrone.

Ces buts sont atteints grâce à un système de messagerie tel que défini dans la revendication 1.

Ainsi, grâce au système selon l'invention, des messages électroniques peuvent être transmis dans un délai très court entre deux utilisateurs d'un système de messagerie standard. En effet, les moyens de notification en combinaison avec le moyen de veille permettent d'assurer la continuité de la transmission jusqu'au terminal du destinataire, ce qui n'était pas possible jusqu'à présent dans les messageries standards car les messages étaient archivés sur le serveur en attendant que l'utilisateur se connecte pour consulter sa boîte aux lettres. De plus, les moyens de notification peuvent être intégrés sur des serveurs de messagerie standard existants, ce qui minimise le coût d'installation du système de l'invention.

Pour envoyer l'information de notification au moyen de veille des terminaux, le moyen de notification comprend un agent de notification en liaison avec un système de notification qui peut utiliser une table de correspondance entre les adresses électroniques des destinataires des messages et les adresses des terminaux correspondants.

Selon un mode de réalisation de l'invention, le système peut comprendre une pluralité de serveurs, les serveurs de messagerie directement accessibles par les terminaux destinataires des messages étant en liaison avec des moyens de notification.

Selon une caractéristique de l'invention, les terminaux peuvent comprendre un moyen pour insérer dans les messages un champ correspondant à une indication de remise rapide. Cette opération peut être réalisée par l'utilisateur avec son logiciel de messagerie habituel, ce qui représente un avantage important dans la facilité d'utilisation du système de l'invention pour l'utilisateur puisque ce dernier n'a pas besoin de se former à un logiciel de messagerie supplémentaire. Le logiciel de messagerie habituel n'a toutefois pas besoin d'utiliser un protocole de messagerie standard. Dans ce cas, le logiciel est juste déclaré comme logiciel de messagerie par défaut, de préférence au niveau du système d'exploitation du terminal, et sinon dans un paramètre de configuration de l'agent de veille.

Dans le cas de messages comprenant une indication de remise rapide, les serveurs autres que les serveurs directement accessibles par les terminaux destinataires des messages peuvent comprendre un moyen de hiérarchisation des messages pour transmettre en priorité les messages comprenant l'indication de remise rapide.

Le moyen de notification peut comprendre en outre un gestionnaire de présence pour renvoyer au serveur une information de non-joignabilité du ou des terminaux destinataires des messages, ledit serveur transmettant l'information de non-joignabilité au terminal émetteur des messages. Le gestionnaire de présence utilise de préférence un ou plusieurs des protocoles standards tels que XMPP, SIP/SIMPLE ou H323 qui sont aussi utilisés par l'agent et le système de notification.

Selon une caractéristique de l'invention, les terminaux peuvent comprendre chacun un moyen de tri automatique pour sélectionner et afficher séparément les messages comprenant l'indication de remise rapide.

L'information de notification peut comprendre le numéro des messages à rapatrier de sorte que seuls les messages dont le numéro est mentionné dans l'information de notification sont rapatriés.

L'invention a également pour objet un procédé de transmission de messages électroniques tel que défini dans la revendication 11.

Ainsi, les messages envoyés sont automatiquement rapatriés sur le ou les terminaux destinataires donnant l'impression aux utilisateurs d'une transmission synchrone. A la différence des messageries instantanées connues, le réseau n'est pas encombré par des consultations récurrentes des boîtes aux lettres car le ou les serveurs de messagerie ne sont accédés pour le téléchargement uniquement lorsque l'arrivée d'un message est notifié.

Selon une caractéristique de l'invention, l'étape b) est effectuée par un agent de notification en liaison avec un système de notification.

Pour envoyer l'information de notification dans l'étape b), on peut interroger une table de correspondance entre les adresses électroniques des destinataires des messages et les adresses des terminaux correspondants.

Selon une caractéristique de l'invention, dans l'étape a), on peut insérer dans les messages un champ correspondant à une indication de remise rapide.

Dans un mode de réalisation où les messages sont acheminés à travers une pluralité de serveurs, les serveurs qui ne sont pas directement accessibles par un des terminaux destinataires des messages transmettent en priorité les messages comprenant l'indication de remise rapide alors que les serveurs locaux en bout de ligne envoient l'information de notification aux terminaux.

Le procédé selon l'invention peut comprendre en outre une étape de gestion de présence pour renvoyer au terminal émetteur des messages une information de non-joignabilité du ou des terminaux destinataires desdits messages. Dans ce cas, la gestion de présence peut être basée sur un ou plusieurs des protocoles standards tels que XMPP, SIP/SIMPLE ou H323 qui sont aussi utilisés par l'agent et le système de notification.

Le procédé peut comprendre en outre une étape de tri et d'affichage automatique sur les terminaux des messages comprenant l'indication de remise rapide.

Selon un mode de réalisation particulier, dans l'étape c), seuls sont rapatriés les messages dont le numéro est indiqué dans l'information de notification envoyée.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique globale d'un mode de réalisation du système selon l'invention,
- la figure 2 est un ordinogramme illustrant les étapes de mise en oeuvre d'un procédé selon l'invention.

### Description détaillée des modes de réalisation de l'invention

La présente invention s'applique aux systèmes de messagerie électronique standards actuels, tels que les services "e-mail" rencontrés sur le réseau public Internet. L'invention propose d'intégrer des fonctionnalités essentiellement sous forme logicielle dans les serveurs et les terminaux habituellement utilisés dans ces systèmes de messagerie standards pour réaliser des envois instantanés de messages électroniques. Les fonctionnalités proposées sont compatibles avec les normes et protocoles actuellement utilisés pour le courrier électronique, ce qui permet à tout utilisateur de réaliser des échanges de messages instantanés à partir de son logiciel de messagerie qu'il utilise habituellement. Ainsi, grâce à l'invention, l'utilisateur peut envoyer et recevoir en un temps très court des messages en utilisant son logiciel de messagerie habituel. D'autre part, si le réseau possède des capacités de transmission suffisantes, les messages envoyés peuvent comprendre des contenus multimédias tels que du son ou des images en plus du texte.

Par souci de simplification, le réseau informatique de communication, qui peut être ouvert comme le réseau Internet ou fermé tel qu'un réseau d'entreprise de type Intranet et à travers lequel les différentes parties interviennent dans l'opération de transmission des messages, sera simplement dénommé "réseau" dans la suite de la description. D'autre part, pour ne pas alourdir inutilement la description de l'invention, celle-ci sera ci-après décrite en relation avec un système dans lequel les utilisateurs disposent, en tant que terminal d'envoi et de réception des messages, d'un terminal fixe, tel qu'un ordinateur personnel connecté à un réseau informatique et dénommé par la suite simplement "terminal". Cependant, la présente invention s'applique d'une manière générale à tous les terminaux qui comprennent des moyens d'envoi et de réception de messages électroniques via un réseau de communication comme un téléphone mobile ou un assistant numérique personnel pour lequel l'opérateur propose un service d'accès au réseau ou similaire tel que les services "WAP" par exemple.

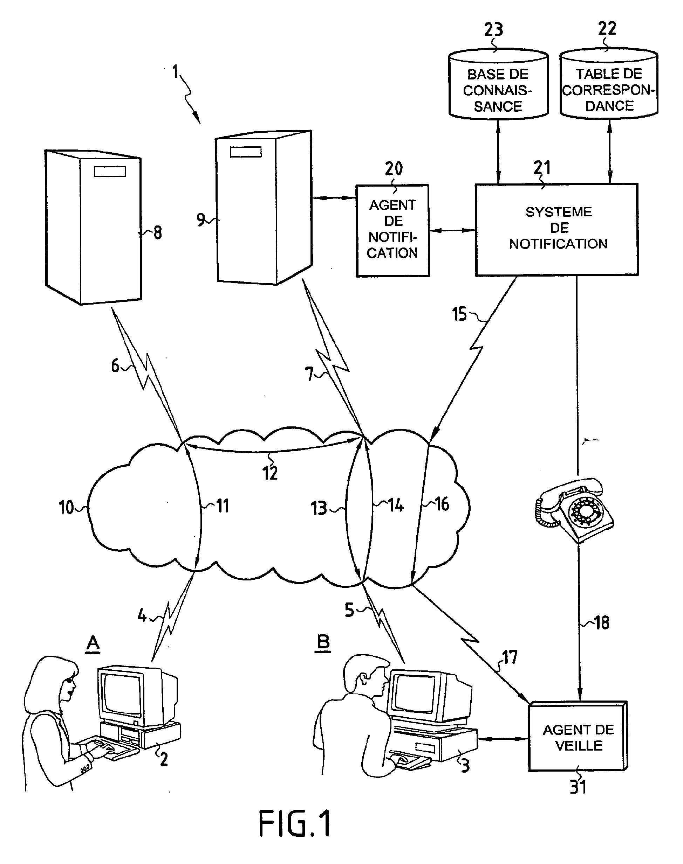

La figure 1 est une vue globale d'un système 1 selon l'invention montrant les relations entre les différentes parties intervenant selon le procédé de l'invention. Les parties qui interviennent principalement lors d'une opération de transmission de messages électroniques sont des utilisateurs équipés d'un terminal et un ou plusieurs serveurs de messagerie auxquels les utilisateurs ont accès depuis leur terminal afin de recevoir et envoyer du courrier électronique. Sur le plan logiciel, hormis les moyens propres à l'invention qui seront décrits en détail, le système de messagerie comprend classiquement deux sous-systèmes, à savoir des agents utilisateurs ou logiciels de messagerie dans les terminaux qui sont des programmes permettant de composer et de recevoir des messages, d'y répondre ou de manipuler des boîtes aux lettres, et des agents de transfert de message dans les serveurs pour acheminer un message d'un émetteur à un ou plusieurs destinataires.

Le système représenté en figure 1 est une illustration simplifiée du système de messagerie de la présente invention qui montre deux utilisateurs A et B respectivement équipés des terminaux 2 et 3 entre lesquels des messages électroniques peuvent être échangés via un réseau 10. Toutefois, au vu de la description qui suit, l'homme du métier envisagera sans difficulté la mise en oeuvre d'un tel système sur un réseau à plus grande échelle auquel un grand nombre d'utilisateurs peuvent avoir accès.

Le réseau 10 représente le réseau de communication à travers lequel les messages et les informations vont être échangés. Le serveur 8 correspond au serveur dont l'utilisateur A est client, c'est à dire le serveur qui propose le service de messagerie dont l'utilisateur A est client et auquel il accède depuis son terminal 2 par une liaison 4 via le réseau 10. De même, le serveur 9 est le serveur auquel l'utilisateur B se connecte via le réseau 10 à partir de son terminal 3 et une liaison 5 pour avoir accès au service de messagerie dont il est client. Ceci correspond à la configuration la plus courante entre deux utilisateurs, à savoir lorsqu'un message est envoyé par un utilisateur A à un utilisateur B, celui-ci est d'abord envoyé au serveur de messagerie de A dont la fonction est de l'envoyer au serveur de messagerie de B pour remise à B.

Dans une configuration encore plus simplifiée, les utilisateurs A et B pourraient également avoir accès au même serveur de messagerie et, dans ce cas, le système selon l'invention pourrait être mis en oeuvre avec un serveur unique entre les deux terminaux.

A l'inverse, suivant la distance entre les utilisateurs, le nombre de serveurs entre les terminaux peut être beaucoup plus important. En effet, si le serveur contacté n'est pas le serveur local du destinataire, le message sera transféré à autant de serveurs que nécessaire pour atteindre le serveur pour qui l'adresse du destinataire est locale.

Comme expliqué en détail plus loin dans la description, il suffit que le serveur en bout de chaîne, c'est-à-dire le serveur dont les destinataires des messages sont clients, soit équipé des moyens de notification conforme à l'invention.

Les serveurs 8 et 9 comprennent de manière conventionnelle des moyens de connexion au réseau 10 via des lignes de communications 6 et 7, des moyens de stockage et des moyens de traitement. Ces serveurs peuvent comprendre, en outre, des moyens de cryptage et de décryptage afin de réaliser des transmissions de données sous forme codée. De plus, conformément à l'invention, les serveurs du système comprennent de préférence des agents de transfert de message ("MTA") capables de reconnaître et traiter en priorité les messages qui comportent une indication de remise rapide afin de réduire le temps de propagation de tels messages entre les serveurs.

Les lignes de communication 4 et 5 des terminaux sont des lignes de transmissions bidirectionnelles de type filaire électrique, optique, ou autres (boucle locale radio, liaison infrarouge, etc....) suivant le type de terminal utilisé.

Dans l'exemple considéré à la figure 1, c'est l'utilisateur A qui envoie un message à l'utilisateur B. Conformément à l'invention, le serveur 9 dont l'utilisateur est client est en liaison avec un agent de notification 20 qui est activé sur réception d'un message standard comprenant éventuellement une indication de remise rapide. Spécifiquement, l'agent de notification est un ensemble de règles qui dialogue avec un système de notification 21 en fonction de certaines conditions qui seront décrites plus loin.

Pour envoyer l'information de notification au destinataire du message, le système de notification 21 utilise une table de correspondance 22 qui permet à ce dernier de déterminer l'adresse du terminal destinataire (typiquement adresse IP) à partir de l'adresse électronique du destinataire indiquée dans le message. Typiquement, la table de correspondance correspond à un dispositif de procédure de connexion unique ("Single Sign On") mémorisant l'adresse IP du terminal ou de correspondance permanente de type adresse électronique/numéro de ligne d'accès.

D'autre part, une base de connaissance 23 peut être associée au système de notification 21 pour permettre à celui-ci de mettre en oeuvre un gestionnaire de présence. La base de connaissance 23 contient la liste de tous les utilisateurs connectés au réseau à un instant déterminé. Cette base est mise à jour régulièrement par le gestionnaire de présence lié au système de notification 21 utilisé. Il est alors possible de connaître à un instant déterminé la disponibilité de chacun des utilisateurs du réseau. Les protocoles utilisés par le gestionnaire de présence, ainsi que par l'agent et le système de notification, sont de préférence les protocoles standardisés de gestion de présence tels que "XMPP", "SIP/SIMPLE" ou "H323". L'agent de notification peut également utiliser le gestionnaire de présence pour prévenir l'émetteur du message que le destinataire n'est pas présent sur le réseau au moment de l'envoi.

L'agent de notification est destiné à envoyer une information de notification à un agent de veille 31 associé au terminal 3 de l'utilisateur B. L'agent de veille 31 surveille l'arrivée des informations de notification qui sont envoyées par l'agent de notification 20. Lorsque l'agent de veille reçoit une information de notification, il peut, suivant un paramètre de configuration, notifier l'utilisateur ou déclencher le logiciel de messagerie habituel pour télécharger le ou les messages concernés. L'agent de veille 31 est un programme qui peut être résident dans le terminal 3 et recevoir les informations de notification par le réseau 10 telles que transmises par le système de notification 21 utilisé.

L'agent de veille peut également être présent dans un dispositif périphérique tel qu'un terminal équipé d'un modem qui peut être accédé par appel téléphonique via une liaison téléphonique 18. Dans ce cas, le terminal 3 n'a pas besoin d'être connecté au réseau pour recevoir l'information de notification.

Bien que le système de la figure 1 ne comprenne qu'un agent de notification et un agent de veille du côté de l'utilisateur B, le système selon l'invention peut évidemment comprendre les mêmes moyens du côté de l'utilisateur A afin de permettre l'envoi de messages instantanés des deux côtés. D'une manière générale, tout serveur local et tout terminal qui peut être connecté à un de ces serveurs peuvent comprendre respectivement un agent de notification et un agent de veille tels que décrits précédemment.

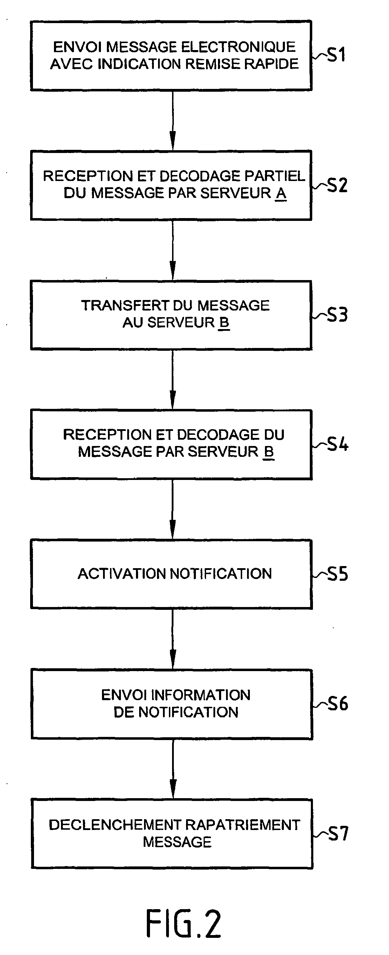

Un mode de mise en oeuvre d'un procédé selon l'invention dans le système de la figure 1 va être décrit en relation avec l'ordinogramme de la figure 2.

Dans une première étape S1, l'utilisateur A envoie un message électronique à l'utilisateur B en indiquant éventuellement que ce message est à remettre dès que possible. Pour cela, l'utilisateur A pourra spécifier de façon connue, au moyen d'une fonction de son logiciel de messagerie standard, que le message est à remettre rapidement. Dans ce cas, le logiciel de messagerie insère un champ spécifique correspondant à une indication de remise rapide dans l'entête du message. Dans le contexte du courrier électronique, les messages peuvent être vus comme ayant une entête et un corps. L'entête contient n'importe quelle information nécessaire pour accomplir la transmission et la livraison. La nature et la forme du champ d'indication de remise rapide dépendent du protocole exploité par le logiciel de messagerie utilisé par A. A titre d'exemple, l'utilisateur A peut insérer un champ avec une extension "MIME" de type "X-IM" selon le mécanisme standard "RFC 2822" (adresse Internet), ou utiliser le champ "importance" du protocole standard, ou bien recourir à une extension au protocole "ESMTP". Bien que cela soit préférable, le logiciel de messagerie habituel n'a toutefois pas besoin d'utiliser un protocole de messagerie standard. Dans ce cas, le logiciel est juste déclaré comme logiciel de messagerie par défaut, de préférence au niveau du système d'exploitation du terminal, et sinon dans un paramètre de configuration de l'agent de veille.

Dans les systèmes de messagerie standard, le fait qu'un message soit envoyé en priorité haute ou basse n'a aucune incidence sur la vitesse à laquelle le mail est transmis à son destinataire. Toutefois, dans le système de l'invention, les serveurs de messagerie pourront tenir compte de l'éventuelle indication de remise rapide pour accélérer l'acheminement et la délivrance des messages.

Comme indiqué sur la figure 1, le message envoyé par le terminal 2 transite (via les lignes de communication 4, 11, 6) d'abord par le serveur 8 qui décode (étape S2) une partie du message pour découvrir l'éventuelle indication de remise rapide s'il possède les moyens de reconnaître et traiter ce type d'indication. Si tel est le cas, le serveur traite le message en priorité en le transférant (via les lignes de communication 6, 12, 7) le plus rapidement possible au serveur 9 (étape S3). En pratique, il place le message en position prioritaire par rapport à l'ensemble des messages qu'il doit transférer.

Dans le cas où le serveur 8 ne pourrait pas reconnaître l'indication de remise rapide, celle-ci est ignorée et le message est transféré comme un message standard.

Lorsque le serveur 9 reçoit le message du serveur 10, il décode une partie du message et découvre l'éventuelle indication de remise rapide (étape S4). L'agent de notification 20 effectue alors automatiquement une demande de notification au système de notification 21 utilisé (étape S5) pour déclencher l'envoi d'une information de notification à l'agent de veille 31 associé au terminal 3 de l'utilisateur B destinataire du message (étape S6).

A cet effet, le système de notification procède à la recherche de l'adresse du terminal correspondant à celui du destinataire indiqué dans le message, à savoir l'utilisateur B. Pour cela, le système de notification accède à la table de correspondance 22. Une fois l'adresse du terminal établie, le système de notification envoie une information de notification au dispositif de veille associé au terminal.

L'information de notification peut être envoyée à l'agent de veille soit directement à travers le réseau 10 (lignes de communication 15, 16 et 17), soit par liaison téléphonique (ligne téléphonique 18) si le terminal 31 est équipé d'un moyen de réception de données par liaison téléphonique tel qu'un modem standard. Dans ce dernier cas, l'utilisateur B n'a pas besoin d'être connecté au réseau pour recevoir l'information de notification. Il peut être alors prévu une fonction supplémentaire de l'agent de veille qui consiste à ordonner au terminal 3 de se connecter au réseau 10 pour rapatrier le message.

L'agent de notification peut également interroger la base de connaissance 23 avant d'envoyer l'information de notification pour s'assurer que l'utilisateur B est connecté au réseau à cet instant. Dans la négative, l'agent de notification peut renvoyer au serveur 9, dans un message SMTP standard, une information de non-joignabilité de l'utilisateur B que le serveur 8 retransmet à l'émetteur du message, c'est-à-dire l'utilisateur A.

L'information de notification envoyée comprend au minimum une information qui indique qu'un ou plusieurs messages à destination de l'utilisateur B sont en attente sur le serveur 11 pour déclencher le rapatriement du ou des messages sur le terminal. L'information de notification peut en outre comprendre le numéro du message devant être remis rapidement afin de ne rapatrier que le message concerné.

Dès que l'agent de veille reçoit l'information de notification, suivant une option de configuration, il notifie l'utilisateur ou déclenche le logiciel de messagerie habituel pour rapatrier les messages ou éventuellement le message dont il a reçu le numéro (étape S7).

L'utilisateur B récupère alors son message de manière classique, c'est-à-dire par connexion du terminal 3 au serveur 11 et envoi d'une requête (lignes de communication 5, 14 et 7) puis téléchargement (lignes de communication 7, 13 et 5) du ou des messages en attente sur le serveur ou, éventuellement, seulement du message dont il a reçu le numéro.

L'utilisateur B renvoie éventuellement un accusé de réception si celui-ci était demandé (suivant le protocole standard RFC 2298). De plus, l'utilisateur B peut aussi envoyer une réponse en indiquant le maintien de la conversation en cours en utilisant un champ spécifique tel que le champ "References" défini dans la norme "RFC 2822". Le logiciel de messagerie de l'utilisateur B peut utiliser ce champ pour trier et afficher les messages suivants les conversations en cours.

En réalité, le processus qui vient d'être décrit en détail étape par étape, se déroule quasiment en temps réel donnant l'impression à l'utilisateur que la transmission est synchrone. Le déroulement des étapes S1 à S7 est transparent pour l'utilisateur qui ne perçoit pas de temps de latence dans la propagation du message.

Les messages avec indication de remise rapide selon l'invention peuvent être présentés de façon indépendante par rapport aux autres messages de la messagerie sur les terminaux des utilisateurs. Dans ce cas, un affichage spécifique peut être prévu pour avoir à l'écran seulement les messages comportant une indication de remise rapide ou de suivi de conversation. Le terminal de l'utilisateur comprend alors des moyens de tri pour sélectionner les messages instantanés parmi l'ensemble des messages présents dans le terminal.

Par conséquent, la présente invention propose une solution technique qui permet de réduire le délai de transmission des messages dans un système de messagerie classique. Cette solution représente un avantage économique important car elle s'intègre aux équipements logiciels et matériels existants à la fois au niveau des serveurs et des terminaux des utilisateurs.

## Revendications

1. Système de messagerie comprenant au moins un premier terminal (2), un deuxième terminal (3) et un serveur de messagerie (9) par lequel transite au moins un message électronique envoyé à partir du premier terminal (2) à destination du deuxième terminal (3) via un réseau informatique (10), **caractérisé en ce que** le serveur de messagerie (9) est en liaison avec des moyens de notification pour envoyer une information de notification audit deuxième terminal (3) destinataire du message, l'adresse dudit deuxième terminal étant déterminée par les moyens de notification à partir de l'adresse électronique indiquée dans le message, et **en ce que** ledit deuxième terminal comprend un moyen de veille (31) pour activer le rapatriement du message en réponse à l'information de notification.

2. Système selon la revendication 1, **caractérisé en ce que** les moyens de notification comprennent un agent de notification (20) en liaison avec un système de notification (21).

3. Système selon la revendication 1 ou 2, **caractérisé en ce que** les moyens de notification comprennent en outre une table (22) de correspondance entre les adresses électroniques des destinataires des messages et les adresses des terminaux correspondants.

4. Système selon l'une quelconque des revendications 1 à 3, **caractérisé en ce qu'**il comprend une pluralité de serveurs de messagerie (8, 9), les serveurs de messagerie directement accessibles par les terminaux destinataires des messages étant en liaison avec des moyens de notification.

5. Système selon l'une quelconque des revendications 1 à 4, **caractérisé en ce que** les terminaux (2, 3) comprennent un moyen pour insérer dans les messages un champ correspondant à une indication de remise rapide.

6. Système selon la revendication 5, **caractérisé en ce qu'**il comprend une pluralité de serveurs (8, 9) et **en ce qu'**au moins un des serveurs autre que les serveurs directement accessibles par les terminaux destinataires des messages comprend un moyen de hiérarchisation des messages pour transmettre en priorité les messages comprenant l'indication de remise rapide.

7. Système selon la revendication 5 ou 6, **caractérisé en ce qu'**au moins un des terminaux comprend un moyen de tri automatique pour sélectionner et afficher séparément les messages comprenant l'indication de remise rapide.

8. Système selon l'une quelconque des revendications 1 à 7, **caractérisé en ce que** l'information de notification comprend le numéro des messages à rapatrier de sorte que seuls les messages dont le numéro est indiqué dans l'information de notification sont rapatriés automatiquement.

9. Système selon l'une quelconque des revendications 1 à 8, **caractérisé en ce que** les moyens de notification comprennent en outre un gestionnaire de présence (23) pour renvoyer au serveur une information de non-joignabilité du ou des terminaux destinataires des messages, ledit serveur transmettant l'information de non-joignabilité au terminal émetteur des messages.

10. Système selon la revendication 9, **caractérisé en ce que** le gestionnaire de présence utilise un ou plusieurs des protocoles standards tels que XMPP, SIP/SIMPLE ou H323.

11. Procédé de transmission de messages électroniques dans un système de messagerie comprenant au moins un premier terminal (2), un deuxième terminal (3) et un serveur de messagerie (9), ledit procédé comprenant une étape
a) d'envoi d'au moins un message par le premier terminal (2) à destination du deuxième terminal (13) via un réseau informatique (10), ledit message transitant par le serveur de messagerie (9),
**caractérisé en ce que** le procédé comprend en outre les étapes suivantes:
b) envoi, par des moyens de notification en liaison avec le serveur de messagerie (9), d'une information de notification audit deuxième terminal destinataire du message, l'adresse dudit deuxième terminal étant déterminée par les moyens de notification à partir de l'adresse électronique du destinataire indiquée dans le message,
c) téléchargement dudit message par le deuxième terminal en réponse à l'information de notification.

12. Procédé selon la revendication 11, **caractérisé en ce que** l'étape b) est effectuée par un agent de notification (20) en liaison avec un système de notification (21).

13. Procédé selon la revendication 11 ou 12, **caractérisé en ce que**, dans l'étape b), on interroge une table (22) de correspondance entre les adresses électroniques des destinataires des messages et les adresses des terminaux correspondants.

14. Procédé selon l'une quelconque des revendications 11 à 13, **caractérisé en ce que**, dans l'étape a), on insère dans les messages un champ correspondant à une indication de remise rapide.

15. Procédé selon la revendication 14, **caractérisé en ce que**, dans l'étape a), le ou les serveurs transmettent en priorité les messages comprenant l'indication de remise rapide lorsque le ou les serveurs ne sont pas directement accessibles par un des terminaux destinataires des messages.

16. Procédé selon la revendication 14 ou 15, **caractérisé en ce qu'**il comprend en outre une étape de tri et d'affichage automatique sur les terminaux des messages comprenant l'indication de remise rapide.

17. Procédé selon l'une quelconque des revendications 11 à 16, **caractérisé en ce que**, dans l'étape c), seuls sont rapatriés les messages dont le numéro est indiqué dans l'information de notification envoyée.

18. Procédé selon l'une quelconque des revendications 11 à 17, **caractérisé en ce qu'**il comprend en outre une étape de gestion de présence pour renvoyer au terminal émetteur des messages une information de non-joignabilité du ou des terminaux destinataires desdits messages.

19. Procédé selon la revendication 18, **caractérisé en ce que** la gestion de présence est basée sur un ou plusieurs des protocoles standards tels que XMPP, SIP/SIMPLE ou H323.

## Claims

1. Messaging system comprising at least one first terminal (2), one second terminal (3) and one messaging server (9) through which passes at least one electronic message sent from the first terminal (2) to the second terminal (3) via a computer network (10), **characterized in that** the messaging server (9) is linked with notification means for sending a notification indication to said second terminal (3) receiving the message, the address of said second terminal being determined by the notification means from the electronic address indicated in the message, and **in that** said second terminal comprises a monitoring means (31) for activating the retrieval of the message in response to the notification indication.

2. System according to Claim 1, **characterized in that** the notification means comprise a notification agent (20) linked with a notification system (21).

3. System according to Claim 1 or 2, **characterized in that** the notification means also comprise a mapping table (22) between the electronic addresses of the recipients of the messages and the addresses of the corresponding terminals.

4. System according to any one of Claims 1 to 3, **characterized in that** it comprises a plurality of messaging servers (8, 9), the messaging servers directly accessible by the terminals receiving the messages being linked with notification means.

5. System according to any one of Claims 1 to 4, **characterized in that** the terminals (2, 3) comprise a means for including in the messages a field corresponding to a rapid delivery indication.

6. System according to Claim 5, **characterized in that** it comprises a plurality of servers (8, 9) and **in that** at least one of the servers other than the servers directly accessible by the terminals receiving the messages comprises a means of hierarchically organizing messages to transmit the messages that include the rapid delivery indication as a priority.

7. System according to Claim 5 or 6, **characterized in that** at least one of the terminals comprises an automatic sorting means for selecting and separately displaying the messages comprising the rapid delivery indication.

8. System according to any one of Claims 1 to 7, **characterized in that** the notification signal comprises the number of the messages to be retrieved so that only the messages whose number is indicated in the notification signal are retrieved automatically.

9. System according to any one of Claims 1 to 8, **characterized in that** the notification means also comprise a presence manager (23) for returning to the server an indication of non-reachability of the terminal or terminals receiving messages, said server transmitting the non-reachability indication to the terminal sending the messages.

10. System according to Claim 9, **characterized in that** the presence manager uses one or more of the standard protocols such as XMPP, SIP/SIMPLE or H.323.

11. Method of transmitting electronic messages in a messaging system comprising at least one first terminal (2), one second terminal (3) and one messaging server (9), said method comprising a step
a) for sending at least one message by the first terminal (2) to the second terminal (13) via a computer network (10), said message passing through the messaging server (9),
**characterized in that** the method also comprises the following steps:
b) sending, by notification means linked with the messaging server (9), of a notification indication to said second terminal receiving the message, the address of said second terminal being determined by the notification means from the electronic address of the recipient indicated in the message,
c) downloading of said message by the second terminal in response to the notification indication.

12. Method according to Claim 11, **characterized in that** the step b) is performed by a notification agent (20) linked with a notification system (21).

13. Method according to Claim 11 or 12, **characterized in that**, in the step b), a mapping table (22) between the electronic addresses of the recipients of the messages and the addresses of the corresponding terminals is interrogated.

14. Method according to any one of Claims 11 to 13, **characterized in that**, in the step a), a field corresponding to a rapid delivery indication is inserted into the messages.

15. Method according to Claim 14, **characterized in that**, in the step a), the server or servers transmit the messages that include the rapid delivery indication as a priority when the server or servers are not directly accessible by one of the terminals receiving the messages.

16. Method according to Claim 14 or 15, **characterized in that** it also comprises a step for sorting and automatically displaying on the terminals the messages that include the rapid delivery indication.

17. Method according to any one of Claims 11 to 16, **characterized in that**, in the step c), only the messages whose number is indicated in the notification indication sent are retrieved.

18. Method according to any one of Claims 11 to 17, **characterized in that** it also comprises a presence management step for returning to the terminal sending the messages an indication of non-reachability of the terminal or terminals receiving said messages.

19. Method according to Claim 18, **characterized in that** the presence management is based on one or more of the standard protocols, such as XMPP, SIP/SIMPLE or H.323.

## Patentansprüche

1. Mitteilungs-Übermittlungssystem, das mindestens ein erstes Endgerät (2), ein zweites Endgerät (3) und einen Mail-Server (9) aufweist, über den mindestens eine elektronische Mitteilung läuft, die ausgehend vom ersten Endgerät (2) über ein Informatiknetz (10) an das zweite Endgerät (3) geschickt wird, **dadurch gekennzeichnet, dass** der Mail-Server (9) mit Benachrichtigungseinrichtungen in Verbindung steht, um eine Benachrichtigungsinformation an das zweite Endgerät (3) zu senden, für das die Mitteilung bestimmt ist, wobei die Adresse des zweiten Endgeräts von den Benachrichtigungseinrichtungen ausgehend von der in der Mitteilung angezeigten elektronischen Adresse bestimmt wird, und dass das zweite Endgerät eine Überwachungseinrichtung (31) aufweist, um das Kopieren der Mitteilung als Antwort auf die Benachrichtigungsinformation zu aktivieren.

2. System nach Anspruch 1, **dadurch gekennzeichnet, dass** die Benachrichtigungseinrichtungen ein Benachrichtigungsmittel (20) in Verbindung mit einem Benachrichtigungssystem (21) aufweisen.

3. System nach Anspruch 1 oder 2, **dadurch gekennzeichnet, dass** die Benachrichtigungseinrichtungen außerdem eine Korrespondenztabelle (22) zwischen den elektronischen Adressen der Empfänger der Mitteilungen und den Adressen der entsprechenden Endgeräte aufweisen.

4. System nach einem der Ansprüche 1 bis 3, **dadurch gekennzeichnet, dass** es mehrere Mail-Server (8, 9) aufweist, wobei die Mail-Server, die direkt für die die Mitteilungen empfangenden Endgeräte zugänglich sind, mit den Benachrichtigungseinrichtungen in Verbindung stehen.

5. System nach einem der Ansprüche 1 bis 4, **dadurch gekennzeichnet, dass** die Endgeräte (2, 3) eine Einrichtung aufweisen, um in die Mitteilungen ein Feld einzufügen, das einer Anzeige der schnellen Übergabe enthält.

6. System nach Anspruch 5, **dadurch gekennzeichnet, dass** es mehrere Server (8, 9) aufweist, und dass mindestens ein anderer Server als die direkt für die die Mitteilungen empfangenden Endgeräte zugänglichen Server eine Einrichtung zur hierarchischen Gliederung der Mitteilungen aufweist, um prioritär die Mitteilungen zu übertragen, die die Anzeige der schnellen Übergabe enthalten.

7. System nach Anspruch 5 oder 6, **dadurch gekennzeichnet, dass** mindestens eines der Endgeräte eine Einrichtung zur automatischen Sortierung aufweist, um die die Anzeige der schnellen Übergabe enthaltenden Mitteilungen getrennt auszuwählen und anzuzeigen.

8. System nach einem der Ansprüche 1 bis 7, **dadurch gekennzeichnet, dass** die Benachrichtigungsinformation die Nummer der zu kopierenden Mitteilungen enthält, damit nur die Mitteilungen, deren Nummer in der Benachrichtigungsinformation enthalten ist, automatisch kopiert werden.

9. System nach einem der Ansprüche 1 bis 8, **dadurch gekennzeichnet, dass** die Benachrichtigungseinrichtungen außerdem ein Anwesenheits-Verwaltungsprogramm (23) aufweisen, um an den Server eine Information der Nichterreichbarkeit des oder der Endgeräte zurückzusenden, für die die Mitteilungen bestimmt sind, wobei der Server die Information der Nichterreichbarkeit an das die Mitteilungen sendende Endgerät überträgt.

10. System nach Anspruch 9, **dadurch gekennzeichnet, dass** das Anwesenheits-Verwaltungsprogramm eines oder mehrere der Standardprotokolle wie XMPP, SIP/SIMPLE oder H323 verwendet.

11. Verfahren zur Übertragung elektronischer Mitteilungen in einem Mitteilungs-Übermittlungssystem, das mindestens ein erstes Endgerät (2), ein zweites Endgerät (3) und einen Mail-Server (9) aufweist, wobei das Verfahren einen Schritt
a) des Sendens mindestens einer Mitteilung durch das erste Endgerät (2) über ein Informatiknetz (10) an das zweite Endgerät (3) aufweist, wobei die Mitteilung über den Mail-Server (9) läuft,
**dadurch gekennzeichnet, dass** das Verfahren außerdem die folgenden Schritte aufweist:
b) Senden, durch die Benachrichtigungseinrichtungen in Verbindung mit dem Mail-Server (9), einer Benachrichtigungsinformation an das zweite Endgerät, für das die Mitteilung bestimmt ist, wobei die Adresse des zweiten Endgeräts von den Benachrichtigungseinrichtungen ausgehend von der in der Mitteilung angezeigten elektronischen Adresse des Empfängers bestimmt wird,
c) Herunterladen der Mitteilung durch das zweite Endgerät als Antwort auf die Benachrichtigungsinformation.

12. Verfahren nach Anspruch 11, **dadurch gekennzeichnet, dass** der Schritt b) von einem Benachrichtigungsmittel (20) in Verbindung mit einem Benachrichtigungssystem (21) durchgeführt wird.

13. Verfahren nach Anspruch 11 oder 12, **dadurch gekennzeichnet, dass** im Schritt b) eine Korrespondenztabelle (22) zwischen den elektronischen Adressen der Empfänger der Mitteilungen und den Adressen der entsprechenden Endgeräte abgefragt wird.

14. Verfahren nach einem der Ansprüche 11 bis 13, **dadurch gekennzeichnet, dass** im Schritt a) in die Mitteilungen ein Feld eingefügt wird, das einer Anzeige der schnellen Übergabe entspricht.

15. Verfahren nach Anspruch 14, **dadurch gekennzeichnet, dass** im Schritt a) der oder die Server prioritär die die Anzeige der schnellen Übergabe enthaltenden Mitteilungen übertragen, wenn der oder die Server für eines der Empfänger-Endgeräte der Mitteilungen nicht direkt zugänglich sind.

16. Verfahren nach Anspruch 14 oder 15, **dadurch gekennzeichnet, dass** es außerdem einen Schritt des Sortierens und der automatischen Anzeige der die Anzeige der schnellen Übergabe enthaltenden Mitteilungen in den Endgeräten aufweist.

17. Verfahren nach einem der Ansprüche 11 bis 16, **dadurch gekennzeichnet, dass** im Schritt c) nur die Mitteilungen kopiert werden, deren Nummer in der gesendeten Benachrichtigungsinformation angezeigt ist.

18. Verfahren nach einem der Ansprüche 11 bis 17, **dadurch gekennzeichnet, dass** es außerdem einen Schritt der Anwesenheitsverwaltung aufweist, um an das die Mitteilungen sendende Endgerät eine Information der Nichterreichbarkeit des oder der Endgeräte, für die die Mitteilungen bestimmt sind, zurückzusenden.

19. Verfahren nach Anspruch 18, **dadurch gekennzeichnet, dass** die Anwesenheitsverwaltung auf einem oder mehreren der Standardprotokolle wie XMPP, SIP/SIMPLE oder H323 basiert.
